# EUROPÄISCHE PATENTANMELDUNG

(11) **EP 1 731 262 A1**
(43) Veröffentlichungstag der Anmeldung: **13.12.2006**
(21) Anmeldenummer: 06010662.2
(22) Anmeldetag: 24.05.2006
(51) Int. Cl.: B24B 31/06, B24B 31/073, F01D 5/28, F01D 5/34

(54) **Verfahren zum Oberflächenstrahlen von integral beschaufelten Rotoren**

(30) Priorität: 31.05.2005 DE 102005024733
(71) Anmelder: MTU Aero Engines GmbH, 80995 München (DE)
(72) Erfinder: Baus, Andreas, 82178 Puchheim (DE); Lebküchner, Götz, 82110 Germering (DE); Picard, Rolf-Jürgen, 42111 Wuppertal (DE)

(57) **Zusammenfassung**

Die Erfindung betrifft ein Verfahren zum Oberflächenstrahlen von integral beschaufelten Rotoren. Erfindungsgemäß umfasst das Verfahren zumindest die folgenden Schritte: a) Bereitstellen eines integral beschaufelten Rotors (15); b) Bereitstellen einer Gleitschleifanlage (10); c) Anordnen des integral beschaufelten Rotors (15) in einem Schleifbehälter (11) der Gleitschleifanlage (10); d) Befüllen des Schleifbehälters (11) der Gleitschleifanlage (10) mit Strahlkugeln (16); e) Betreiben der mit dem integral beschaufelten Rotor (15) und den Strahlkugeln (16) befüllten Gleitschleifanlage (10) zur Beschleunigung der Strahlkugeln, wobei die beschleunigten Strahlkugeln (16) den integral beschaufelten Rotor (15) gleichzeitig an den Oberflächen aller Lauf schaufeln (17) sowie im Ringraum (18) zwischen benachbarten Laufschaufeln (17) verfestigen.

## Beschreibung

Die Erfindung betrifft ein Verfahren zum Oberflächenstrahlen von integral beschaufelten Rotoren, insbesondere von integral beschaufelten Gasturbinenrotoren.

Gasturbinen, insbesondere Flugtriebwerke, verfügen insbesondere im Bereich eines Verdichters sowie einer Turbine über mindestens einen mit rotierenden Laufschaufeln bestückten Rotor, wobei die Laufschaufeln zunehmend als integraler Bestandteil des Rotors ausgebildet sind. Integral beschaufelte Rotoren werden auch als blisk (bladed disk) oder bling (bladed ring) bezeichnet, und zwar abhängig davon, ob ein scheibenförmiger oder ein ringförmiger Rotorgrundkörper vorliegt. Während des Betriebs einer Gasturbine werden insbesondere die Rotoren derselben stark beansprucht. Um die Verschleißrate herab zu setzten, werden integral beschaufelten Rotoren durch spezielle Oberflächenbearbeitungsverfahren verfestigt.

Zur Oberflächenverfestigung von integral beschaufelten Rotoren findet nach dem Stand der Technik das Kugelstrahlen Verwendung. Hierbei werden nach dem Stand der Technik Strahlkugeln, die als Stahlkugeln oder auch Keramikkugeln ausgeführt sein können, mithilfe von Druckluft beschleunigt und über mindestens eine Düse auf die zu verfestigenden Oberflächenabschitte des integral beschaufelten Rotors gerichtet. Mit solchen Düsen kann immer nur ein räumlich eng begrenzter Abschnitt bzw. Oberflächenbereich des integral beschaufelten Rotors verfestigt werden, sodass die oder jede Düse, welche die zum Oberflächenverfestigen verwendeten Strahlkugeln auf den integral beschaufelten Rotor richtet, relativ zum integral beschaufelten Rotor verfahren bzw. bewegt werden muss. Dabei werden nach dem Stand der Technik Oberflächenbereiche der Laufschaufeln des integral beschaufelten Rotors sowie Oberflächenbereiche der Nabe bzw. eines Ringraums zwischen benachbarten Laufschaufeln nacheinander mit unterschiedlichen Düseneinstellungen gestrahlt. Daraus folgt unmittelbar, dass das nach dem Stand der Technik verwendete Verfahren zum Oberflächenstrahlen von integral beschaufelten Rotoren sehr lange dauert und des weiteren mit hohen Anlagekosten verbunden ist.

Hiervon ausgehend liegt der vorliegenden Erfindung das Problem zu Grunde, ein neuartiges Verfahren zum Oberflächenstrahlen von integral beschaufelten Rotoren zu schaffen.

Dieses Problem wird durch ein Verfahren im Sinne von Patentanspruch 1 gelöst. Erfindungsgemäß umfasst das Verfahren zum Oberflächenstrahlen von integral beschaufelten Rotoren zumindest die folgenden Schritte: a) Bereitstellen eines integral beschaufelten Rotors; b) Bereitstellen einer Gleitschleifanlage; c) Anordnen des integral beschaufelten Rotors in einem Schleifbehälter der Gleitschleifanlage; d) anschließendes Befüllen des Schleifbehälters der Gleitschleifanlage mit Strahlkugeln; e) Betreiben der mit dem integral beschaufelten Rotor und den Strahlkugeln befüllten Gleitschleifanlage zur Beschleunigung der Strahlkugeln, wobei die beschleunigten Strahlkugeln den integral beschaufelten Rotor gleichzeitig an den Oberflächen aller Laufschaufeln sowie im Ringraum zwischen benachbarten Laufschaufeln verfestigen.

Im Sinne der hier vorliegenden Erfindung wird vorgeschlagen, eine üblicherweise zum abrasiven Gleitschleifen bzw. chemisch unterstützten Gleitschleifen verwendete Gleitschleifanlage zum Oberflächenstrahlen integral beschaufelter Rotoren einzusetzen. Hierzu wird in dem Schleifbehälter der Gleitschleifanlage der an seiner Oberfläche zu verfestigende, integral beschaufelte Rotor positioniert, wobei der Schleifbehälter weiterhin mit Strahlkugeln befüllt wird. Durch Betreiben der mit dem integral beschaufelten Rotor und den Strahlkugeln befüllten Gleitschleifanlage wird der integral beschaufelte Rotor gleichzeitig an den Oberflächen aller Laufschaufeln sowie an der Oberfläche der Nabe bzw. im Bereich des Ringraums zwischen benachbarten Laufschaufeln verfestigt. Hierdurch kann die zum Oberflächenstrahlen von integral beschaufelten Rotoren benötigte Prozesszeit deutlich verkürzt werden. Die ohnehin zum Gleitschleifen verwendete Gleitschleifanlage wird im Sinne der Erfindung einer weiteren Verwendung, nämlich dem Oberflächenverfestigen bzw. Oberflächenstrahlen zugeführt, wodurch Anlagekosten reduziert werden können.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine Anordnung aus einer Gleitschleifanlage und einem im Bereich seiner Oberfläche zu verfestigenden, integral beschaufelten Rotor im Querschnitt zur Verdeutlichung des erfindungsgemäßen Verfahrens;
- Fig. 2: das Detail II der Anordnung gemäß Fig. 1 in Draufsicht.

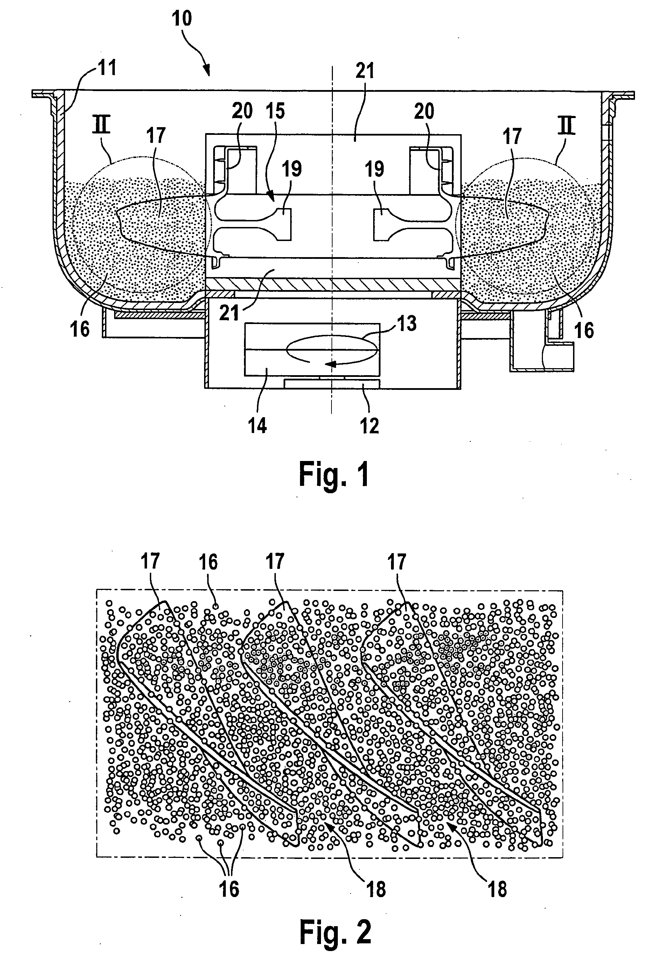

Nachfolgend wird die hier vorliegende Erfindung unter Bezugnahme auf Fig. 1 und 2 in größerem Detail beschrieben.

Fig. 1 zeigt eine schematisierte Darstellung einer Gleitschleifanlage 10, umfassend einen Schleifbehälter 11 und einen mit dem Schleifbehälter 11 fest verbundenen Motor 12. Der Motor 12 wird beim Betreiben der Gleitschleifanlage 10 angetrieben und versetzt dabei im Sinne des Pfeils 13 einen Unwuchtkörper 14 in Rotation. Die Rotation des Unwuchtkörpers 14 induziert eine Taumelbewegung des Schleifbehälters 11.

Im Sinne der hier vorliegenden Erfindung wird zum Oberflächenstrahlen eines integral beschaufelten Rotors 15 derselbe im Schleifbehälter 11 der Gleitschleifanlange 10 positioniert. Des weiteren wird der Schleifbehälter 11 der Gleitschleifanlage 10 mit Strahlkugeln 16 befüllt, wobei die Strahlkugeln 16 als Keramikkugeln oder Stahlkugeln ausgeführt sein können. Wie Fig. 1 und 2 entnommen werden kann, werden die Strahlkugeln 16 derart in den Schleifbehälter 11 gefüllt, dass der integral beschaufelte Rotor 15 im Bereich seiner Laufschaufeln 17 sowie im Bereich seiner Nabe bzw. des Ringraums 18 zwischen benachbarten Laufschaufeln 17 allseitig von den Strahlkugeln 16 umgeben ist.

Beim Betreiben der mit dem integral beschaufelten Rotor 15 und den Strahlkugeln 16 befüllten Gleitschleifanlage 10 führen der Schleifbehälter 11 sowie der integral beschaufelte Rotor 15 eine Taumelbewegung aus, die Strahlkugeln 16 werden relativ zum Schleifbehälter 11 sowie zum integral beschaufelten Rotor 15 beschleunigt und bewegen sich auf schneckenförmigen Kreisbahnen durch den Schleifbehälter 11. Hierbei treffen die Strahlkugeln 16 auf die Oberflächen des integral beschaufelten Rotors 15 und geben dabei ihre Energie an dieselben ab. Der integral beschaufelte Rotor 15 wird so im Bereich allen Laufschaufeln 17 sowie im Bereich der Nabe bzw. des Ringraums 18 zwischen benachbarten Laufschaufeln 17 gleichzeitig oberflächengestrahlt bzw. oberflächenverfestigt.

Vorzugsweise wird der integral beschaufelte Rotor 15 derart in dem Schleifbehälter 11 der Gleitschleifanlage 10 angeordnet, dass der integral beschaufelte Rotor 15 starr bzw. ohne Freiheitsgrad für eine Relativbewegung zwischen dem integral beschaufelten Rotor 15 und dem Schleifbehälter 11 mit dem Schleifbehälter 11 verbunden ist. Dabei führen dann Schleifbehälter 11 und integral beschaufelter Rotor 15 beim Betreiben der Gleitschleifanlage 10 zum Oberflächenstrahlen des Rotors 15 eine identische Taumelbewegung aus.

Alternativ ist es auch möglich, den integral beschaufelten Rotor 15 derart in dem Schleifbehälter 11 der Gleitschleifanlage 10 anzuordnen, dass der integral beschaufelte Rotor 15 unter Beibehaltung eines Freiheitsgrads für eine Relativbewegung zwischen dem Rotor 15 und dem Schleifbehälter 11 mit dem Schleifbehälter 11 der Gleitschleifanlage 10 verbunden ist. Der integral beschaufelte Rotor 15 kann sich dann gegenüber dem Schleifbehälter 11 um seine Drehachse relativ zum Schleifbehälter 11 bewegen, in Axialrichtung hingegen ist derselbe starr mit dem Schleifbehälter 11 verbunden.

Mit dem erfindungsgemäßen Verfahren wird demnach ein integral beschaufelter Gasturbinenrotor 15 im Bereich aller Laufschaufeln 17 sowie der Nabe bzw. des Ringraums 18 zwischen benachbarten Laufschaufeln 17 - also an allen aerodynamisch bzw. strömungstechnisch relevanten Oberflächenbereichen des integral beschaufelten Rotors - gleichzeitig verfestigt. Gemäß Fig. 1 werden nicht zu verfestigende Oberflächen des integral beschaufelten Rotors 15, so zum Beispiel radial innenliegende Oberflächenbereiche an Rotorscheiben 19 sowie Oberflächenbereiche an Dichtungsträgern 20 mithilfe von Abdeckvorrichtungen 21 abgedeckt, um so zu verhindern, dass die Strahlkugeln 16 auf diese Oberflächenbereiche auftreffen. Alternativ ist es jedoch auch möglich, eine oder mehrere der in Fig. 1 durch die Abdeckvorrichtungen 21 abgedeckten Oberflächenbereiche gleichzeitig mit den anderen Oberflächenbereichen zu strahlen.

## Patentansprüche

1. Verfahren zum Oberflächenstrahlen von integral beschaufelten Rotoren, insbesondere von integral beschaufelten Gasturbinenrotoren, mit folgenden Schritten:
a) Bereitstellen eines integral beschaufelten Rotors (15),
b) Bereitstellen einer Gleitschleifanlage (10),
c) Anordnen des integral beschaufelten Rotors (15) in einem Schleifbehälter (11) der Gleitschleifanlage (10),
d) Befüllen des Schleifbehälters (11) der Gleitschleifanlage (10) mit Strahlkugeln (16),
e) Betreiben der mit dem integral beschaufelten Rotor (15) und den Strahlkugeln (16) befüllten Gleitschleifanlage (10) zur Beschleunigung der Strahlkugeln, wobei die beschleunigten Strahlkugeln (16) den integral beschaufelten Rotor (15) gleichzeitig an den Oberflächen aller Laufschaufeln (17) sowie im Ringraum (18) zwischen benachbarten Laufschaufeln (17) verfestigen.

2. Verfahren nach Anspruch 1,
**dadurch gekennzeichnet,**
**dass** der integral beschaufelte Rotor (15) derart in dem Schleifbehälter (11) der Gleitschleifanlage (10) angeordnet wird, dass der integral beschaufelte Rotor (15) starr bzw. ohne Freiheitsgrad für eine Relativbewegung zwischen Rotor und Schleifbehälter mit dem Schleifbehälter (11) der Gleitschleifanlage verbunden ist.

3. Verfahren nach Anspruch 1,
**dadurch gekennzeichnet,**
**dass** der integral beschaufelte Rotor (15) derart in dem Schleifbehälter (11) der Gleitschleifanlage (10) angeordnet wird, dass der integral beschaufelte Rotor (15) mit einem Freiheitsgrad für eine Relativbewegung zwischen Rotor und Schleifbehälter mit dem Schleifbehälter (11) der Gleitschleifanlage verbunden ist.

4. Verfahren nach Anspruch 3,
**dadurch gekennzeichnet,**
**dass** der integral beschaufelte Rotor (15) derart mit dem Schleifbehälter (11) verbunden wird, dass sich der Rotor (15) gegenüber dem Schleifbehälter (11) um seine Drehachse drehen kann.

5. Verwendung einer Gleitschleianlage zum Oberflächenstrahlen von integral beschaufelten Rotoren, insbesondere von integral beschaufelten Gasturbinenrotoren.
